# EUROPEAN PATENT APPLICATION

(11) **EP 1 699 159 A1**
(43) Date of publication of application: **06.09.2006**
(21) Application number: 05700392.3
(22) Date of filing: 05.01.2005
(51) Int. Cl.: H04L 7/00, H04B 17/02

(54) **A METHOD FOR IMPLEMENTING THE SYNCHRONIZATION OF THE TIMING SOURCES IN THE NETWORK**

(30) Priority: 05.01.2004 CN 200410002145
(71) Applicant: Huawei Technologies Co., Ltd., Longgang District, Shenzhen, Guangdong 518129 (CN)
(72) Inventor: LIU, Ping, Shenzhen Guangdong 518129 (CN); KE, Shanfeng, Shenzhen Guangdong 518129 (CN)
(74) Representative: Manitz, Finsterwald & Partner GbR
(86) International application number: PCT/CN2005/000017
(87) International publication number: WO 2005/067195

(57) **Abstract**

The present invention discloses a method for realizing automatic synchronization of timing source in network, applied to a ring including more than one network node, each network node executing the following steps: a. selecting a timing source with the highest quality from the timing source currently available for selection according to the timing source quality states, synchronizing the selected timing source, and taking the selected timing source as an available timing source for other network nodes; b. detecting whether the synchronized timing source is from a network interface connected to another network node, if so, setting the timing source quality state to be sent to the network node as a non-synchronous source state; otherwise, proceeding to step c; c. setting the timing source quality state to be sent to all connected network nodes except the network node said in step b as the quality state of the synchronized timing source. By the method, automatic selection and APS (Automatic Protection Switch) of timing source in local networks can be realized.

## Description

### Field of the Technology

The present invention relates to clock synchronization technique, and more specifically, to a method for realizing automatic synchronization of timing source in broadband networks or integrated access networks.

### Background of the Invention

In narrowband services based on Time Division Multiplexing (TDM), all TDM network equipments transmit data according to the clocks which are synchronized in a whole network; while in broadband services, data transmission has not relied on clock synchronization. Narrowband services, however, are frequently born in bearer networks constructed with pure broadband packet technique due to historical reasons.

There are several kinds of pure broadband packet techniques, for example, Asynchronous Transfer Mode (ATM), Internet Protocol (IP), and Multi-Protocol Label Switching (MPLS) etc., and these techniques generally adopt mature Synchronous Digital Hierarchy (SDH) or Synchronous Optical Network (SONET) as physical layer. Therefore, conventional clock synchronization method is also adopted in the existing broadband networks, i.e., the physical layer of SDH/SONET is used to synchronize the clocks.

In the existing broadband networks, clock synchronization of broadband network equipments in a whole network cannot be realized. When a local broadband network e.g. integrated access network is requested to bear narrowband services, it needs to configure clock source-inputted port, clock source state and clock output information on all relevant broadband equipments. Here, the clock source state is generally determined by the quality of the clock.

In practical applications, all configurations related to clock are made artificially, and the parameters which need to be configured are relatively complicated, so it is likely to make mistakes during configuration process, which lays high demand on persons in charge of configurations. In addition, the interface of each broadband network device is artificially configured to be an inputted interface of timing source or not node by node, and the state of each timing source is set without considering the actual clock quality. Therefore, the scheme of timing source synchronization in broadband networks has the following problems: the configurations related to clock are very complicated and hard to maintain, and the clock loop easily occurs due to data configuration mistakes; moreover, the timing source with the highest quality may not necessarily become the actual timing source of the network.

### Summary of the Invention

The object of the present invention is to provide a method for realizing automatic synchronization of timing source in networks, by which automatic selection and automatic protection switch (APS) of timing source can be realized in local networks.

To obtain the object, the technical scheme is implemented in this way:

A method for realizing automatic synchronization of timing source in network, applied to a ring network including more than one network node, wherein the network includes at least one root network node which provides for the ring network a timing source with the highest quality in the ring network, and each network node in the network sends a timing source quality state to all connected network nodes through respective network interfaces; each of the network node executes the following steps:
a. selecting a timing source with the highest quality from the timing source currently available for selection according to the timing source quality states, synchronizing the selected timing source, and taking the selected timing source as an available timing source for other network nodes;
b. detecting whether the synchronized timing source is from a network interface connected to another network node, if so, setting the timing source quality state to be sent to the network node as a non-synchronous source state; otherwise, proceeding to step c;
c. setting the timing source quality state to be sent to all connected network nodes except the network node said in step b as the quality state of the synchronized timing source.

The method further comprises:
d. monitoring status of each timing source in real time by the network node and detecting whether there is a timing source is physically disabled or a timing source quality state is changed, if so, executing step a to step c; otherwise, executing step d.

When detecting that a timing source is physically disabled or a timing source quality state is changed, before executing step a, further comprising in step d:
comparing the value of timing source quality state of a spare timing source with that of the synchronized timing source by the network node, and if detecting that the values are identical, doing no processing; otherwise, returning to step a.

In the scheme said above, the timing source quality state is carried in Segment Payload. The timing sources available for selection comprise at least one of: one or more than one timing source which is transferred via the network interface of connected network node and the quality state is not non-synchronous source state, and a timing source of its line interface.

In the scheme said above, the network is a broadband network based on SDH or SONET, or an Integrated Access Network based on SDH or SONET. Wherein, the timing source quality state is synchronous status information in SDH-based network or SONET-based network, and the synchronous status information is a hexadecimal number.

As can be seen from the above mentioned description, the main difference between the scheme of the present invention and that of the prior arts is: each network node monitors the change of timing source quality state of each timing source, inserts the timing source quality state in the Segment Payload transmitted to the other network nodes, and dynamically selects the optimal timing source according to the timing source quality state, so the clock synchronization of timing source in a whole network is finally achieved based on the optimal timing source.

The technical difference brings obvious beneficial effects i.e., a synchronization state can be automatically obtained based on the optimal timing source for the network nodes; new synchronization state can be obtained automatically with manual configurations after the network topology or the timing source is changed; the clock loop is obviated; the selection and switching of timing source are completely independent to service. Here, the service includes: Resilient Packet Ring (RPR), Asynchronous Transfer Mode (ATM) Virtual Path Ring (VPRing), APS of SDH and so on.

As can be seen from the above description, the method of the present invention is simple and flexible to implement, and has strong universality.

### Brief Description of the Drawings

Figure 1 is a schematic diagram illustrating the construction of network including five network nodes.
Figure 2 is a flow chart illustrating the method for realizing automatic synchronization of timing source in networks in accordance with an embodiment of the present invention.
Figure 3 is a schematic diagram illustrating a clock transfer link of the network including five network nodes which is adjusted according to the method for realizing automatic synchronizing of timing source in networks.
Figure 4 is a schematic diagram illustrating another clock transfer link of the network including five network nodes which is adjusted according to the method for realizing automatic synchronization of timing source in networks.

### Detailed Description of the Invention

The present invention will be described in detail hereinafter with reference to embodiments and accompanying drawings to make the object, scheme and advantages of the present invention clearer.

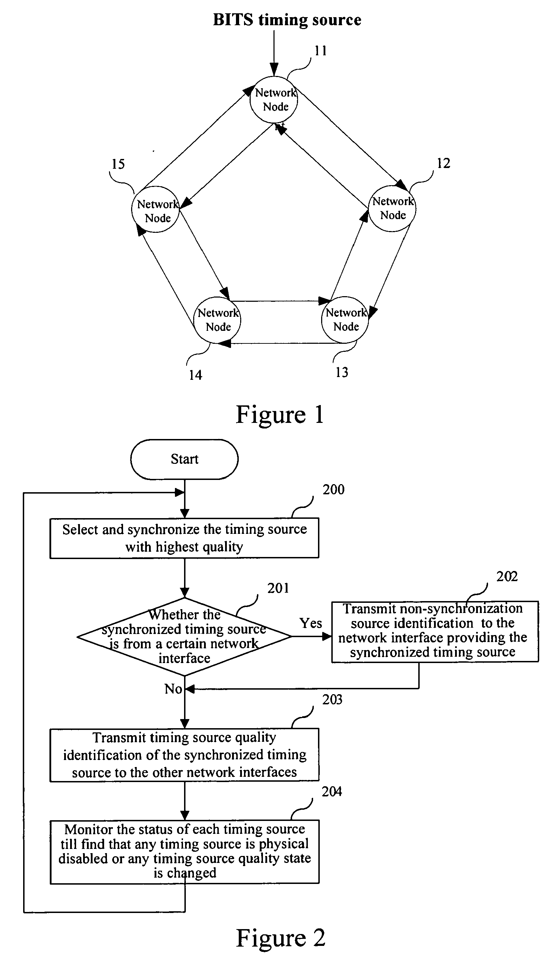

Figure 1 is a schematic diagram illustrating the topological structure of a typical SDH-based double-ring network including five network nodes. The network shown in Fig.1 includes Network Node 11, 12, 13, 14 and 15, and the five network nodes are connected in turn to compose a SDH-based double-ring network. This topology is relatively familiar, for example, RPR network has such kind of topological structure. The network can either be a pure broadband network, or an integrated access network bearing broadband services and narrowband services. In practical applications, the SONET-based network is very similar to the SDH-based network.

The implementation procedure of the method for realizing automatic synchronization of timing source in networks in accordance with an embodiment of the present invention will be illustrated in detail by taking a double-ring network shown in Fig.1 as example.

It should be noted that two conditions need to be satisfied when applying the method of the present invention.

The first condition is: the network using the method of the present invention should include more than one root network node which does not synchronize the timing sources of other network interfaces, and the root node itself has the highest-quality timing source in the whole network, i.e., the root network node provides the timing source with the highest quality for the network. Which network node in the network can be root network node is configured by network administrator in advance. In this embodiment shown in Fig.1, Network Node 11 is set as the root network node in the network.

The second condition is: there is no timing link ring which does not include a root network node in the network using the method of the present invention. So-called timing link ring refers to a ring formed by the transfer direction of the timing source among some nodes in the network, i.e., the network is a ring network and must include at least one root network node. In the embodiment shown in Fig.1, a timing link ring is composed of Network Nodes 11, 12, 13, 14 and 15, and Network Node 11 is set as a root network node.

Generally, a method of deciding whether a network satisfies the second condition is: remove all root network nodes from the timing link topology of the network, decide whether any ring exists in the remaining timing link topology of the network, and if exists, the second condition is not satisfied. For example, in the embodiment shown in Fig.1, on removing Network Node 11 which is set as a root network node, the timing link topology of the whole network is a line, rather than a ring, therefore the network shown in Fig.1 satisfies the second condition.

In terms of the network shown in Fig.1, Network Node 11 connects with a timing source of Building Integrated Timing Supply System (BITS) through its line interface, and uses the BITS timing source as its own timing source, all of the other four network nodes have their respective crystal clocks which are regarded as timing sources respectively. Each timing source has its own timing source quality state, and in this embodiment, the Synchronization Status Message (SSM) in SDH is taken as the timing source quality state. Here, SSM is expressed by the fifth to eighth bit of S 1 byte in the Segment Overload of SDH. ITU-T has given definite specifications on the value of SSM, as shown in table 1:

**Table 1**

| Value of SSM | Description |
|---|---|
| 0 | Unknown Synchronization quality |
| 2 | Principal reference clock which is defined by G.811 and generally a Cs clock |
| 4 | Subordinate clock of switching office which is defined by G.812 and is generally a Rb clock |
| 8 | Subordinate clock of end office which is defined by G.812 and is generally a Rb clock or a crystal clock |
| b | Clock of SDH network node which is defined by G.812 and is generally a crystal clock |
| f | Should not be used to synchronization |
| other | Reserved |

According to the specifications in table 1, in this embodiment, SSM value of the BITS timing source connecting to Network Node 11 is 8, i.e., the timing source of Network Node 11 is a subordinate clock of end office; the SSM values of the other network nodes are b, i.e., the timing sources of the other four network nodes are their respective crystal clocks; the quality of the BITS timing source is higher than those of other network nodes' timing sources.

A detail description about how to establish a clock transfer link in the network shown in Fig.1 will be given hereinafter. Since the working principles of all the network nodes are the same, i.e., each network node repeatedly executes the processing flow shown in Fig.2. The processing flow of the method will be described in detail by taking Network Node 11 as example. As shown in Fig.2, in this embodiment, the processing flow includes the following steps:
Step 200: The network node selects a timing source with the highest quality to synchronize according to the timing source quality state values of timing sources available for selection, and takes the selected timing source as the reference clock for its own network interfaces, i.e., the selected timing source is taken as an available timing source for other network nodes for selection.
Specifically, Network Node 11 compares the SSM values of three timing sources available for selection, wherein the SSM values of three timing sources refer to: SSM of the BITS timing source connected via the line interface, SSM of the timing source transferred from Network Node 12 and SSM of the timing source transferred from Network Node 15. Obviously, the quality of the BITS timing source is the best, therefore Network Node 11 selects the BITS timing source as its own timing source, synchronizes the BITS timing source, and takes it as an available timing source for the network interface connecting to Network Node 12 and Network Node 15. Here, Network Node 11 has three timing sources available for selection only in initial state, and if Network Node 12 and Network Node 15 also synchronize the BITS timing source, only the BITS timing source is available for Network Node 11.
Step 201~202: Decide whether the synchronized timing source is transferred from a certain network interface, if so, the network node will set non-synchronization source state as the timing source quality state of the network interface, indicating that the corresponding node should not use it as a synchronization source; otherwise, proceed to step 203.
In this embodiment, the timing source synchronized by Network Node 11 is transferred from the line interface but not from any network interface, so this step is skipped and the Network Node 11 directly executes step 203. The network interface which is set as non-synchronization source state is regarded as a specific network interface.
Step 203: The network node sets the value of the timing source quality state to be sent to all connected network interfaces except the specific network interface as the value of the timing source quality state of the synchronized timing source.

In this embodiment, Network Node 11 inserts SSM=8 in the links leading to Network Node 12 and Network Node 15, indicating that the timing source transferred from Network Node 11 has a definite quality and can be a selection of synchronized timing source for LAN. Given another example, if the timing source synchronized by Network Node 12 is transferred from Network Node 11, Network Node 12 inserts SSM=8 only in the link leading to Network Node 13, indicating that the timing source can be a selection of synchronizing timing source for Network Node 13.

Step 204: The network node monitors the status of each timing source, and if it finds that any timing source is physically disabled or any timing source quality state is changed, returns to step 200 and re-determines a new optimal timing source.

In this embodiment, after executing steps 200~203, Network Node 11 continues monitoring the changes of SSM of the BITS timing source connecting with line interface and the changes of SSM connecting with two network interfaces, if any timing source is physically disabled or a certain SSM is changed, returns to step 200 and executes steps 200~203 to re-determine a new optimal timing source.

In a same way, Network Node 12 also implements the flow of steps 200~204, and Network Node 12 also has three timing sources available for selection: its own crystal clock, the timing source transferred from Network Node 11 and the timing source transferred from Network Node 13. In step 200, Network Node 12 selects the timing source of Network Node 11 as its own timing source through comparing values of SSM and synchronizes it. Since the timing source synchronized by Network Node 12 is transferred from the network interface connecting to Network Node 11, in step 202, Network Node 12 inserts SSM=f in the link leading to Network Node 11, indicating that Network Node 11 should not take this timing source as its own timing source. In step 203, Network Node 12 inserts SSM=8 in the link leading to Network Node 13. In step 204, Network Node 12 continues monitoring the status of each timing source, if any timing source is physically disabled or any timing source quality state is changed, returns to step 200 and re-determines a new optimal timing source.

Network Node 13, Network Node 14 and Network Node 15 also execute step 202~204 in a same way. The timing sources first selected by the these three network nodes may not be the finally selected timing sources, but after a period of time, BITS timing source with the highest quality will become the timing source synchronized by all these network nodes, thereby realizing automatic synchronization of timing source.

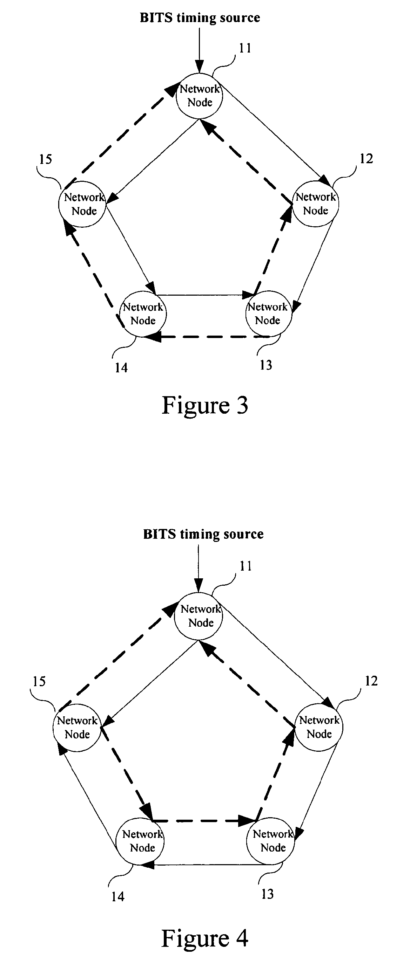

Figure 3 is a kind of clock transfer link finally established. The real lines with arrows express that the network nodes at arrow head take the timing sources from the network nodes at arrow tail as synchronization timing sources, while the dotted lines with arrows express that the network nodes at arrow head do not take the timing sources from the network nodes at arrow tail as synchronization timing sources. For example, Network Node 15 takes the timing source from Network Node 11 as synchronized timing source, while Network Node 11 does not take the timing source transferred from Network Node 15 as its synchronized timing source.

It should be noted that the clock transfer link finally established is likely to have a form different from the form of Fig.3 due to different processing speeds of these network nodes. For example, if the processing speeds of Network Node 12, Network Node 13 and Network Node 14 are relatively fast, while the processing speed of Network Node 15 is relatively slow, a clock transfer link shown in Fig.4 may be established.

The establishing procedure of clock transfer link is described in detail hereinabove. The APS of the timing source when the timing source changes will be described hereinafter.

Upon establishing the clock transfer link shown in Fig.3, Network Node 14 will re-evaluate the timing sources available for selection when the connection between Network Node 15 and Network Node 14 is cut off. Since the value of SSM from Network Node 13 is f, only the crystal clock of Network Node 14 with SSM=8 can be selected, and SSM=b is inserted in the link leading to Network Node 13. Upon finding the SSM from Network Node 14 is changed, since the quality of the new timing source is not as good as that of the former timing source, Network Node 13 does not change the synchronized timing source but insert SSM=8 in the link leading to Network Node 14. Upon finding the SSM from Network Node 13 is changed, Network Node 14 executes steps 200~204 again, selects the timing source from Network Node 13, synchronizes the selected timing source, and inserts SSM=f in the link leading to Network Node 14. Therefore, the APS of the timing source is completed.

In addition, it should be noted that the network node will compare the value of timing source quality state of the spare timing source and that of the working timing source when it finds any timing source is physically disabled or any timing source quality state is changed in step 204, and if the two values are identical, the network node does nothing; otherwise, returns to step 200. Here, the working timing source refers to the timing source currently synchronized by the network node, and the spare timing source refers to another timing source available for selection. For example, after the clock transfer link shown in Fig.3 is established, the working timing source of Network Node 15 is the timing source from Network Node 11, and the spare timing source of Network Node 15 is the timing source connecting to its own line interface, e.g., the crystal clock with SSM=b. If the timing source with SSM=8 is also connected with the line interface of Network Node 15, Network Node 15 does nothing since the SSM value of the spare timing source is identical with the SSM of the working timing source, thereby obviating unnecessary adjustment of timing source.

The foregoing are only preferred embodiments of the present invention and are not inclined to limit the protection scope as defined by the following claims.

## Claims

1. A method for realizing automatic synchronization of timing source in network, applied to a ring network including more than one network node, wherein the network includes at least one root network node which provides for the ring network a timing source with the highest quality in the ring network, and each network node in the network sends a timing source quality state to all connected network nodes through respective network interfaces; wherein each of the network node executes the following steps:
a. selecting a timing source with the highest quality from the timing source currently available for selection according to the timing source quality states, synchronizing the selected timing source, and taking the selected timing source as an available timing source for other network nodes;
b. detecting whether the synchronized timing source is from a network interface connected to another network node, if so, setting the timing source quality state to be sent to the network node as a non-synchronous source state; otherwise, proceeding to step c;
c. setting the timing source quality state to be sent to all connected network nodes except the network node said in step b as the quality state of the synchronized timing source.

2. The method according to claim 1, further comprising:
d. monitoring status of each timing source in real time by the network node and detecting whether there is a timing source is physically disabled or a timing source quality state is changed, if so, executing step a to step c; otherwise, executing step d.

3. The method according to claim 2, wherein when detecting that a timing source is physically disabled or a timing source quality state is changed, before executing step a, further comprising in step d:
comparing the value of timing source quality state of a spare timing source with that of the synchronized timing source by the network node, and if detecting that the values are identical, doing no processing; otherwise, returning to step a.

4. The method according to claim 1, 2 or 3, wherein the timing source quality state is carried in a Segment Payload.

5. The method according to claim 1, 2 or 3, wherein the timing source available for selection comprises at least one of: one or more than one timing source which is transferred via the network interface of connected network node and the quality state is not non-synchronous source state, and a timing source of its line interface.

6. The method according to claim 1, 2 or 3, wherein the network is a broadband network based on Synchronous Digital Hierarchy (SDH) or Synchronous Optical network (SONET).

7. The method according to claim 6, wherein the timing source quality state is synchronous status information in the SDH-based network or the SONET-based network.

8. The method according to claim 7, wherein the synchronous status information is a hexadecimal number.

9. The method according to claim 1, 2 or 3, wherein the network is an Integrated Access Network based on SDH or SONET.

10. The method according to claim 9, wherein the timing source quality state is synchronous status information in the SDH-based network or the SONET-based network.

11. The method according to claim 10, wherein the synchronous status information is a hexadecimal number.
